# EUROPÄISCHE PATENTANMELDUNG

(11) **EP 3 572 290 A1**
(43) Veröffentlichungstag der Anmeldung: **27.11.2019**
(21) Anmeldenummer: 19172871.6
(22) Anmeldetag: 07.05.2019
(51) Int. Cl.: B60R 21/015, B60R 22/48

(54) **INNENÜBERWACHUNG FÜR SICHERHEITSGURTEINSTELLUNG**

(30) Priorität: 22.05.2018 DE 102018207977
(71) Anmelder: ZF Friedrichshafen AG, 88046 Friedrichshafen (DE)
(72) Erfinder: Schutera, Mark, 74670 Forchtenberg (DE); Härle, Tim, 88339 Bad Waldsee (DE); Alagarswamy, Devi, 88212 Ravensburg (DE)

(57) **Zusammenfassung**

Fahrerassistenzsystem für ein Fahrzeug (1) umfassend eine Steuereinheit (3) die dazu eingerichtet ist, einen Zustand (Z) eines Fahrzeuginsassen (Ins) mittels eines neuronalen Netzes (DNN) zu bestimmen und ein Sicherheitsgurtsystem (4) zur Positionierung bzw. Fixierung des Fahrzeuginsassen (Ims) in Abhängigkeit von dem erkannten Zustand (Z) des Fahrzeuginsassen (Ins) anzusteuern.

## Beschreibung

### TECHNISCHES GEBIET

Die vorliegende Offenbarung bezieht sich auf das Gebiet der Fahrerassistenzsysteme, insbesondere auf ein Verfahren und eine Vorrichtung zum Sichern eines Fahrzeuginsassen eines Fahrzeugs mit einer Sicherheitsgurtvorrichtung.

### TECHNISCHER HINTERGRUND

Fahrerassistenzsysteme sind elektronische Einrichtungen für Kraftfahrzeuge, die den Fahrer im Hinblick auf Sicherheitsaspekte und Steigerung des Fahrkomforts unterstützen sollen.

Zu den Fahrerassistenzsystemen gehören beispielsweise die sogenannten Aufmerksamkeitsassistenten (auch "Fahrerzustandserkennung" oder "Müdigkeitserkennung"). Solche Aufmerksamkeitsassistenten umfassen Sensorsysteme zur Überwachung des Fahrers, die beispielsweise die Bewegungen und die Augen des Fahrers verfolgen und so Müdigkeit oder Abgelenktheit feststellen und gegebenenfalls eine Warnung ausgeben.

Aus dem Stand der Technik sind auch Fahrerassistenzsysteme bekannt, die den Fahrzeuginnenraum überwachen. Damit die für die Fahrt verantwortliche Person den Zustand des Fahrzeuginnenraums überblicken kann, sind bei derartigen Systemen ein oder mehrere Kameras vorgesehen, welche den Innenraum überwachen. Ein System zur Überwachung eines Fahrzeuginnenraums, das auf Infrarotstrahlung basiert, ist beispielsweise aus der deutschen Offenlegungsschrift DE 4 406 906 A1 bekannt.

Ferner ist es aus dem Stand der Technik zur Erhöhung der Insassensicherheit bekannt, ein Dreipunktgurtsystem für einen Fahrzeugsitz mit mehreren Gurtstraffern zu versehen. Die Gurtstrafffunktion sieht vor, dass ein Sicherheitsgurt eines angeschnallten Fahrzeuginsassen nach einer Detektion einer sich anbahnenden Kollision durch einen Straffvorgang gestrafft wird. Die Gurtstraffer sind so ausgelegt, dass mit einem Kraftstoß das Gurtband an den Körper des Insassen straff und ohne Spiel angezogen wird, damit der Insasse möglichst bald an der Verzögerung des Fahrzeugs teilnehmen kann und die kinetische Energie des Insassen frühzeitig reduziert wird. Dazu wird eine Spule, mittels welcher der Sicherheitsgurt auf- und abwickelbar ist, ein Stück weit in Aufrollrichtung angetrieben, wodurch der Sicherheitsgurt gestrafft wird. Somit wird bei einem Unfall eine eventuell vorhandene Gurtlose reduziert, so dass eine Rückhaltefunktion des Sicherheitsgurtes gegenüber dem angeschnallten Fahrzeuginsassen realisierbar ist.

Die konventionellen, in Fahrzeugen eingesetzte pyrotechnischen Linearstraffer bauen innerhalb einer möglichst kurzen Zeit von 5 - 12 msec in einer Zylinder-KolbenEinheit eine Kraft von 2 - 2,5 kN auf, mit welcher der Gurt eingezogen wird, um die Gurtlose zu entfernen. Am Ende des Straffweges verrastet der Kolben, um in der anschließenden, passiven Rückhaltephase, bei welcher der Insasse eine Vorverlagerung erfährt, den Insassen zurückzuhalten oder gegen den Widerstand einer Kraftbegrenzungsvorrichtung, wenn diese vorhanden ist, Gurtband wieder frei zu geben.

Aus der DE 10 2006 061 427 A1 ist ein Verfahren und ein Gurtstraffsystem zum Rückhalten von Insassen eines Fahrzeugs bei einem Aufprall auf ein Hindernis bekannt. Das Verfahren sieht vor, dass zunächst ein möglicher Unfall sensiert und dann spätestens vom Zeitpunkt einer ersten Berührung des Fahrzeugs mit dem Hindernis oder bei Überschreiten einer Schwelle für eine Fahrzeugverzögerung über ein Sicherheitsgurtsystem eine mit der Stoßrichtung wirkenden Kraft auf den Insassen aufgebracht wird. Die Kraft wird durch beidseitige Straffung eines Beckengurtes eines Sicherheitsgurtsystems eingeleitet, indem von beiden Seiten mit einer Kraft von mindestens 2000 - 4500 N gestrafft wird und diese Kraft entlang eines Verlagerungsweges des Insassen über eine Haltephase von mindestens 20 m/sec aufrecht erhalten wird. Ein integriertes Gurtstraffsystem zur beidseitigen Straffung eines Beckengurtes umfasst zwei Straffer mit einer gemeinsamen Arbeitskammer.

Ein Sicherheitsgurtsystem umfasst üblicherweise ein Gurtband, welches zwischen Gurtendbeschlag und Gurtschloss einen Beckengurt bildet, an der Gurtzunge umgelenkt und zu einem in Schulternähe eines Insassen angeordneten Umlenkers eines Gurtaufrollers geführt ist und im Bereich zwischen Gurtschloss und Umlenker den Schultergurt bildet. Die Einleitung hoher Kräfte über eine Straffung des Schultergurtes, z. B. durch Straffung im Bereich des Gurtaufrollers oder am Gurtschloss, stößt aufgrund der begrenzten Druckbelastbarkeit im Brustbereich des Insassen an Grenzen.

Das US-Patent US 6,728,616 offenbart eine Vorrichtung zur Verringerung einer Verletzungsgefahr eines Fahrzeuginsassen während eines Unfalls. Die Vorrichtung umfasst ein Mittel zum Variieren der Spannung eines Sicherheitsgurtes in Abhängigkeit von dem Gewicht des Insassen und der Geschwindigkeit des Fahrzeugs. Die Gewichtsbestimmung des Insassen erfolgt über Drucksensoren.

Ausgehend von diesem bekannten Stand der Technik liegt der Erfindung die Aufgabe zugrunde, ein Fahrerassistenzsystem bereitzustellen, das die Sicherheit im Fahrzeug noch weiter erhöht und mittels derer es möglich ist, die Belastungen auf den Insassen zu reduzieren.

Diese Aufgabe wird durch das erfindungsgemäße Fahrerassistenzsystem nach Anspruch 1 und das erfindungsgemäße Verfahren nach Anspruch 10 gelöst. Weitere vorteilhafte Ausgestaltungen der Erfindung ergeben sich aus den Unteransprüchen und der folgenden Beschreibung bevorzugter Ausführungsbeispiele der vorliegenden Erfindung.

Gemäß den unten beschriebenen Ausführungsbeispielen wird ein Fahrerassistenzsystem für ein Fahrzeug bereitgestellt, das eine Steuereinheit umfasst, die dazu ausgerichtet ist, einen Zustand eines Fahrzeuginsassen mittels eines neuronalen Netzes zu bestimmen und ein Sicherheitsgurtsystem zur Positionierung bzw. Fixierung des Fahrzeuginsassen in Abhängigkeit von dem erkannten Zustand des Fahrzeuginsassen (Ins) anzusteuern.

Befindet sich der Insasse in einer vorgelagerten Haltung, wie beispielsweise einer Haltung, in welcher er im Falle eines Unfalls vom Airbag nicht optimal geschützt würde, so wird er durch Straffen des Sicherheitsgurtsystems in eine normale Sitzposition zurückgezogen und dort gehalten. So kann es beispielsweise im Fall eines bevorstehenden Unfalls vor Eintritt der Kollision zu einem Schleudern des Fahrzeugs kommen. Dies führt bei den Fahrzeuginsassen zu einer Positionsverlagerung, beispielsweise einer Seitenverlagerung in Richtung der Windschutzscheibe oder B-Säule des Fahrzeuges, aus der eine erhöhte Verletzungsgefahr resultiert.

Bei der Steuereinheit kann es sich beispielsweise um ein Steuergerät (electronic control unit ECU oder electronic control module ECM), das einen Prozessor umfasst, oder dergleichen handeln. Die Steuereinheit kann beispielsweise die Steuereinheit eines Bordcomputers eines Kraftfahrzeugs sein und neben der Erzeugung eines 3D-Modell eines Fahrzeuginsassen des Fahrzeugs auch noch andere Funktionen im Kraftfahrzeug übernehmen. Die Steuereinheit kann aber auch eine Komponente sein, die dediziert für die Erzeugung einer virtuellen Ansicht des Fahrzeuginnenraums vorgesehen ist.

Bei dem Prozessor kann es sich beispielsweise um eine Steuereinheit wie eine zentrale Verarbeitungseinheit (CPU = central processing unit) handeln, die Programminstruktionen ausführt.

Gemäß einem Ausführungsbeispiel ist die Steuereinheit dazu eingerichtet, eine vordefinierten Fahrsituation zu erkennen und das Sicherheitsgurtsystem zur Positionierung bzw. Fixierung des Fahrzeuginsassen bei Erkennen der vordefinierten Fahrsituation anzusteuern. Durch das Zurückhalten der Insassen vor einer Verunfallung können insbesondere bei einem Aufprall, einem Bremsvorgang oder Schleudervorgang die Insassen in einer optimierten Position gehalten werden, so dass die Verletzungsgefahr der Insassen reduziert wird und darüber hinaus insbesondere der Fahrzeugführer in eine Position gebracht wird, in welcher er besser auf die kritische Situation reagieren und eventuell zu einer Stabilisierung des Fahrzeugs beitragen kann.

Die Steuereinheit kann dazu eingerichtet sein, Parameter einer vordefinierten Fahrsituation zu erkennen und das Sicherheitsgurtsystem zur Positionierung bzw. Fixierung des Fahrzeuginsassen in Abhängigkeit dieser Parameter anzusteuern. Die Steuereinheit ist beispielsweise dazu ausgelegt, ein Sicherheitsgurtsystem anzusteuern. Insbesondere ist die Steuereinheit dazu ausgelegt, das Sicherheitsgurtsystem auf Grundlage der Detektion einer sich anbahnenden Kollision abhängig von der Haltung und dem Gewicht des Fahrzeuginsassen anzusteuern.

Das Sicherheitsgurtsystem kann aus mehreren Einheiten aufgebaut sein, die unabhängig voneinander angesteuert werden. Beispielsweise kann das Sicherheitsgurtsystem einen oder mehrere steuerbare Gurtstraffer umfassen. Alternativ oder zusätzlich kann das Sicherheitsgurtsystem eine steuerbare Gurtsperre umfassen.

Die Steuereinheit kann ferner dazu eingerichtet sein, den Zustand des Fahrzeuginsassen durch die Analyse eines oder mehrerer Kamerabilder einer oder mehrerer Fahrzeuginnenraumkameras durch das neuronale Netzwerk zu ermitteln. Bei den ein oder mehreren Fahrzeuginnenraumkameras kann es sich beispielsweise um Grauwert- oder Farbbild-Kameras, Stereokameras oder Time-of-Flight-Kameras handeln. Vorzugsweise sind die Kameras in Weitwinkeloptik ausgelegt. Die Kameras können beispielsweise derart angeordnet werden, dass jede Stelle im Fahrzeuginneren im Blickfeld mindestens einer Kamera ist. Dabei können typische Haltungen der Fahrgäste bei der Montage der Kameras berücksichtigt werden, so dass keine oder möglichst wenige Verdeckungen durch Personen entstehen. Die Kamerabilder bestehen beispielsweise aus einer Vielzahl von Pixeln, die jeweils einen Grauwert, einen Farbwert, oder ggf. eine Tiefeninformation definieren.

Zusätzlich oder alternativ kann die Steuereinheit dazu ausgelegt sein, auf Grundlage von Kamerabildern einer oder mehrerer Fahrzeuginnenraumkameras ein 3D-Modell des Fahrzeuginsassen zu erzeugen und den Zustand des Fahrzeuginsassen durch die Analyse des 3D-Modells durch das neuronale Netzwerk zu ermitteln. Die Steuereinheit kann ferner dazu ausgelegt sein, gemeinsame Merkmale eines Fahrzeuginsassen in mehreren Kamerabildern zu erkennen, um ein 3D-Modell des Fahrzeuginsassen zu erzeugen. Das Erkennen gemeinsamer Merkmale eines Fahrzeuginsassen kann beispielsweise durch Korrelieren von Kamerabildern miteinander erfolgen. Bei einem gemeinsamen Merkmal kann es sich beispielsweise um ein korreliertes Pixel oder korellierte Pixelgruppen handeln, oder um bestimmte strukturelle oder farbliche Muster in den Kamerabildern. Beispielsweise können Kamerabilder miteinander korreliert werden, um übereinstimmende Pixel oder Merkmale zu identifizieren, wobei der Fachmann auf ihm bekannte geeignete Bildkorrelierungsverfahren zurückgreifen kann, beispielsweise auf Verfahren, wie sie von Olivier Faugeras et al. im Research Report "Real-time correlation-based stereo: algorithm, implementations and applications", RR-2013, INRIA 1993 beschrieben sind. Es können beispielsweise zwei Kamerabilder miteinander korelliert werden. Um die Rekonstruktionsgenauigkeit zu erhöhen, können jedoch auch mehr als zwei Kamerabilder miteinander korreliert werden.

Die Steuereinheit kann dazu ausgelegt sein, das Modell des Fahrzeuginsassen mittels stereoskopischer Techniken aus aktuellen Kamerabildern zu rekonstruieren. So kann das Erzeugen eines 3D-Modells ein Rekonstruieren der dreidimensionalen Position eines Fahrzeuginsassen, beispielsweise eines Pixels oder Merkmals, mittels stereoskopischer Techniken umfassen. Das auf diese Weise gewonnene 3D-Modell des Fahrzeuginsassen kann beispielsweise als Sammlung der dreidimensionalen Koordinaten aller im Korrelationsprozess identifizierter Pixel sein. Zusätzlich kann diese Sammlung an dreidimensionalen Punkten auch durch Flächen genähert werden, um ein 3D-Modell mit Oberflächen zu erhalten.

Der Zustand des Fahrzeuginsassen kann beispielsweise durch Haltung des Fahrzeuginsassen und Gewicht des Fahrzeuginsassen definiert sein. Die Steuereinheit ist beispielsweise dazu ausgelegt, eine Haltung und ein Gewicht eines Fahrzeuginsassen zu ermitteln und das Sicherheitsgurtsystem abhängig von der Haltung und dem Gewicht des Fahrzeuginsassen anzusteuern. Haltung und Gewicht eines Insassen können hierbei insbesondere durch eine Bildanalyse von Kamerabildern der Fahrzeuginnenraumkameras ermittelt werden. Insbesondere kann die Steuereinheit dazu ausgelegt sein, durch Auswerten von Kamerabildern ein oder mehrerer Innenraumkameras oder durch Korrelieren von Kamerabildern mehrerer Fahrzeuginnenraumkameras ein 3D-Modell eines Fahrzeuginsassen zu erzeugen, das Rückschlüsse auf die Haltung und das Gewicht zulässt. Unter Haltung ist hierbei beispielsweise die Körperhaltung und Kopfhaltung des Fahrzeuginsassen zu verstehen. Darüber hinaus können auch Rückschlüsse auf das Verhalten des Fahrzeuginsassen, wie beispielsweise Blickrichtung und Handgelenkpose des Insassen, gezogen werden.

Die Steuereinheit kann ferner dazu ausgelegt sein, das Modell des Fahrzeuginsassen unter Berücksichtigung von Tiefeninformationen zu erzeugen, die von wenigstens einer der Kameras bereitgestellt werden. Solche Tiefeninformationen werden beispielsweise von stereoskopischen Kameras oder Time-of-Flight-Kameras bereitgestellt. Solche Kameras liefern für einzelne Pixel Tiefeninformationen, die zusammen mit den Pixelkoordinaten herangezogen werden können, um das Modell zu erzeugen.

Gemäß einer bevorzugten Ausführungsform der Erfindung ist das erfindungsgemäße Sicherheitsgurtsystem derart vorgesehen, dass nach dem Straffen der Gurtstraffen eine steuerbare Gurtsperre den Insassen in einer zurückgehaltenen Position hält.

Die unten detaillierter beschriebenen Ausführungsbeispiele betreffen auch ein Verfahren für ein Fahrerassistenzsystem, bei dem ein Zustand eines Fahrzeuginsassen (Ins) mittels eines neuronalen Netzes bestimmt wird und ein Sicherheitsgurtsystem zur Positionierung bzw. Fixierung eines Fahrzeuginsassen (Ins) in Abhängigkeit von dem erkannten Zustand des Fahrzeuginsassen angesteuert wird.

Ausführungsformen werden nun beispielhaft und unter Bezugnahme auf die beigefügten Zeichnungen beschreiben, in denen:
Fig. 1 eine schematische Draufsicht auf ein Fahrzeug zeigt, das mit einem erfindungsgemässen Fahrerassistenzsystem ausgestattet ist;
Fig. 2 ein Blockdiagramm zeigt, das schematisch die Konfiguration eines Fahrerassistenzsystems gemäß einem Ausführungsbeispiel der vorliegenden Erfindung darstellt;
Fig. 3 ein Blockdiagramm ist, das eine beispielhafte Konfiguration eines Steuergeräts zeigt,
Fig. 4a ein Flussdiagramm eines Prozesses zur Bestimmung des Zustands eines Fahrzeuginsassen durch Analyse von einem oder mehreren Kamerabildern Img1-Img8 gemäß einem Ausführungsbeispiel zeigt;
Fig. 4b ein Flussdiagramm eines Prozesses zur Bestimmung des Zustands eines Fahrzeuginsassen gemäß einem alternativen Ausführungsbeispiel zeigt, bei dem ein weiteres neuronales Netz vorgesehen ist, um Tiefeninformationen aus Kamerabildern zu gewinnen;
Fig. 4c ein Flussdiagramm eines Prozesses zur Bestimmung des Zustands eines Fahrzeuginsassen gemäß einem alternativen Ausführungsbeispiel zeigt, bei dem durch Korrelation von Kamerabildern ein 3D-Modell des Fahrzeuginsassen erzeugt wird;
Fig. 5 beispielhaft einen Prozess des Korrelierens zweier Kamerabilder zeigt, um übereinstimmende Pixel zu identifizieren;
Fig. 6 einen beispielhaften Prozess des Rekonstruierens der dreidimensionalen Position eines Pixels mittels stereoskopischer Techniken zeigt;
Fig. 7 eine schematische Abbildung eines neuronalen Netzwerks zeigt;
Fig. 8 eine beispielhafte Ausgabe des neuronalen Netzwerks zeigt;
Fig. 9 ein erfindungsgemässes Sicherheitsgurtsystem zeigt;
Fig. 10 eine beispielhafte qualitative Heuristik für eine Sicherheitsgurtroutine zeigt;
Fig. 11 eine Kollisionserkennung gemäß der vorliegenden Erfindung zeigt;
Fig. 12 eine beispielhafte qualitative Heuristik für eine Sicherheitsgurtroutine zeigt, bei der die Gurtparameter unter Berücksichtigung einer prädizierten Verzögerung, die der Fahrer beim Aufprall erfahren wird, angepasst werden; und
Fig. 13 eine Attention map zeigt, die wichtige Eigenschaften für die Gewichtsklassifizierung mit CNNs visualisiert.

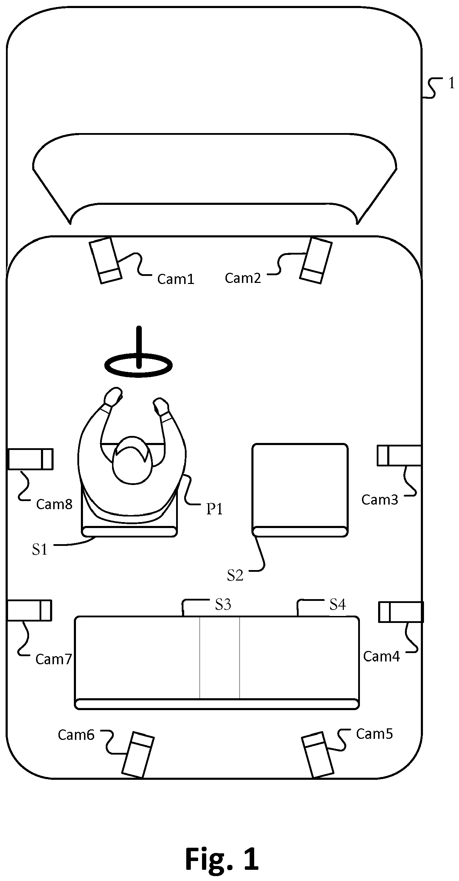

Fig. 1 zeigt eine schematische Draufsicht auf ein Fahrzeug 1, das mit einem Innenraumüberwachungssystem ausgestattet ist. Das Innenraumüberwachungssystem umfasst eine beispielhafte Anordnung von Innenraumkameras Cam1-Cam8. Zwei Innenraumkameras Cam1, Cam2 befinden sich an der Vorderseite des Fahrzeuginnenraums 2, zwei Innenraumkameras Cam3, Cam4 befinden sich auf der rechten Seite des Fahrzeuginnenraums 2, zwei Innenraumkameras Cam5, Cam6 befinden sich auf der Rückseite und zwei Innenraumkameras Cam7, Cam8 befinden sich auf der linken Seite des Fahrzeuginnenraums 2. Jede Innenraumkamera Cam1-Cam8 erfasst einen Teil des Fahrzeuginnenraums 2 des Fahrzeugs 1. Die beispielhafte Ausstattung des Fahrzeugs 1 mit Innenraumkameras ist so ausgelegt, dass die Innenraumkameras Cam1-Cam8 auch nach Zustieg von Personen den kompletten Fahrzeuginnenraum, insbesondere die Fahrzeuginsassen im Sichtbereich haben. Bei den Kameras Cam1-Cam8 kann es sich beispielsweise um Grauwert- oder Farbbild-kameras in Weitwinkeloptik handeln.

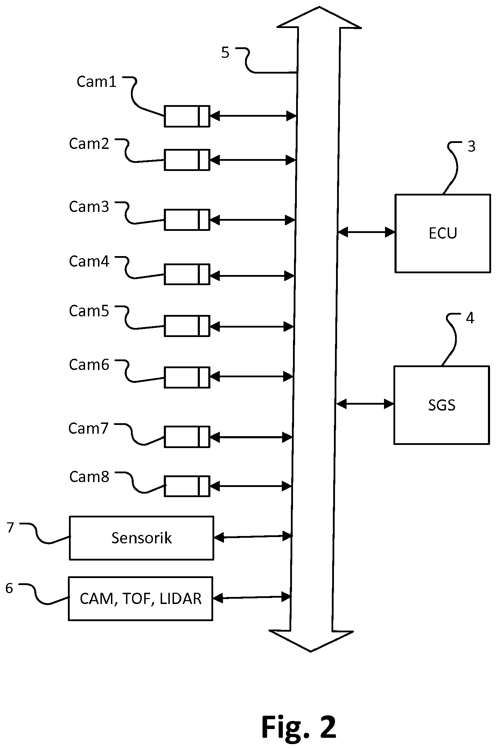

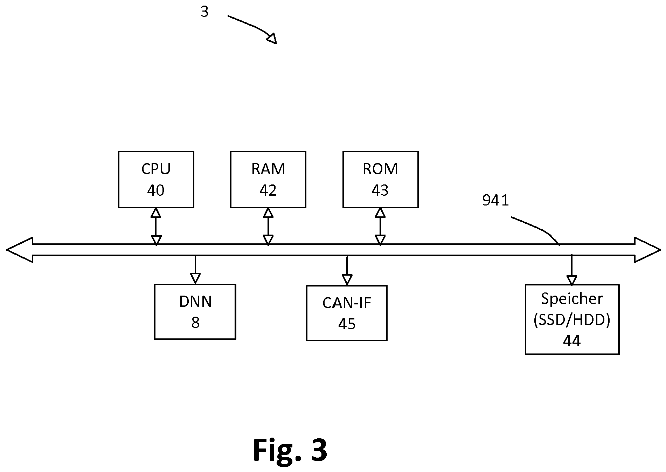

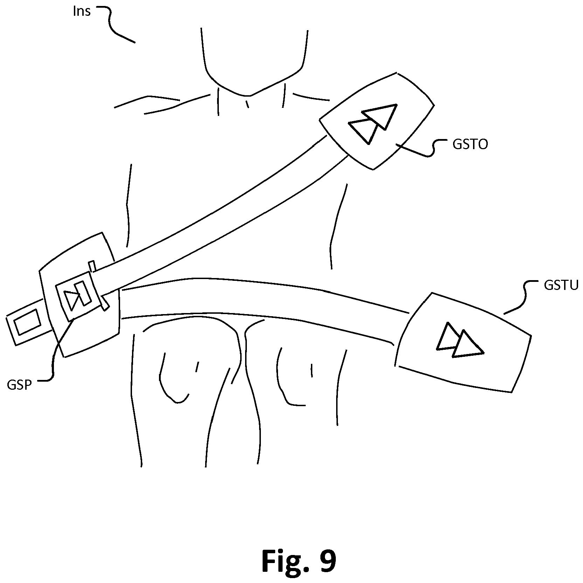

Fig. 2 zeigt ein Blockdiagramm, das ein beispielhaftes Fahrerassistenzsystem auf schematische Weise darstellt. Zusätzlich zu Innenraumkameras Cam1-Cam8 umfasst das Fahrerassistenzsystem eine Steuereinheit 3 (ECU), ein Sicherheitsgurtsystem 4 (SGS) und einen oder mehrere Umfeldsensoren 6 (CAM, TOF, LIDAR). Die durch die verschiedenen Fahrzeuginnenraumkameras Cam1-Cam8 erfassten Bilder werden über ein Kommunikationssystem 5 (z.B. einen CAN-Bus oder LIN-Bus) zu der Steuereinheit 3 zur Verarbeitung in der Steuereinheit 3 transferiert. Die Steuereinheit 3, die in Fig. 3 und der zugehörigen Beschreibung näher beschrieben ist, ist dazu ausgelegt, die Bilddaten der Fahrzeuginnenraumkameras Cam1-Cam8 kontinuierlich zu empfangen und einer Bildverarbeitung zu unterziehen, um daraus einen Zustand eines oder mehrerer Fahrzeuginsassen (beispielsweise Gewicht und Haltung) abzuleiten und auf dieser Basis das Sicherheitsgurtsystem 4 zu steuern. Das Sicherheitsgurtsystem 4 ist dazu ausgelegt, einen auf einem Fahrzeugsitz sitzenden Insassen während der Fahrt und insbesondere bei Auftreten einer kritischen Fahrsituation, wie beispielsweise einer sich anbahnenden Kollision, zu sichern. Das Sicherheitsgurtsystem 4 ist in Fig. 9 und der zugehörigen Beschreibung genauer beschrieben.

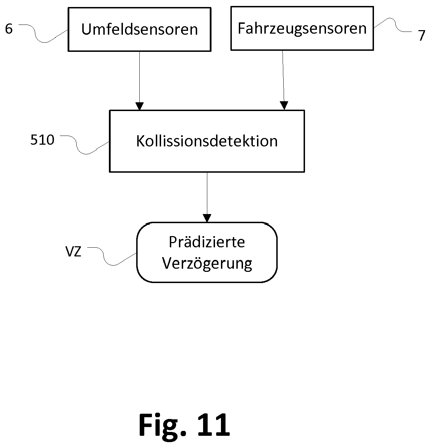

Die Umfeldsensoren 6 sind dazu ausgelegt, das Umfeld des Fahrzeugs zu erfassen, wobei die Umfeldsensoren 6 am Fahrzeug montiert sind und Objekte oder Zustände im Umfeld des Fahrzeugs erfassen. Hierzu zählen insbesondere Kameras, Radar-Sensoren, Lidar-Sensoren, Ultraschall-Sensoren oder dergleichen. Die erfassten Sensordaten der Umfeldsensoren 6 werden über das Fahrzeugkommunikationsnetzwerk 5 zur Steuereinheit 3 transferiert, in der sie im Hinblick auf das Vorliegen einer kritischen Fahrsituation analysiert werden, wie dies unten mit Bezug zu Fig. 11 beschrieben ist.

Fahrzeugsensoren 7 sind vorzugsweise solche Sensoren, die einen Zustand des Fahrzeugs oder einen Zustand von Fahrzeugteilen erfassen, insbesondere deren Bewegungszustand. Die Sensoren können einen Fahrzeuggeschwindigkeitssensor, einen Gierratensensor, einen Beschleunigungssensor, einen Lenkradwinkelsensor, einen Fahrzeuglastsensor, Temperatursensoren, Drucksensoren und dergleichen umfassen. Beispielsweise können auch Sensoren entlang der Bremsleitung angeordnet sein, um Signale auszugeben, die den Bremsflüssigkeitsdruck an verschiedenen Stellen entlang der hydraulischen Bremsleitung anzeigen. Andere Sensoren in der Nähe des Rades können vorgesehen sein, welche die Radgeschwindigkeit und den Bremsdruck erfassen, der am Rad aufgebracht wird.

Fig. 3 zeigt ein Blockdiagramm, das eine beispielhafte Konfiguration einer Steuereinheit darstellt. Bei der Steuereinheit 3 kann es sich beispielsweise um ein Steuergerät (electronic control unit ECU oder electronic control module ECM) handeln. Die Steuereinheit 3 umfasst einen Prozessor 40. Bei dem Prozessor 40 kann es sich beispielsweise um eine Recheneinheit wie eine zentrale Verarbeitungseinheit (CPU = central processing unit) handeln, die Programminstruktionen ausführt.

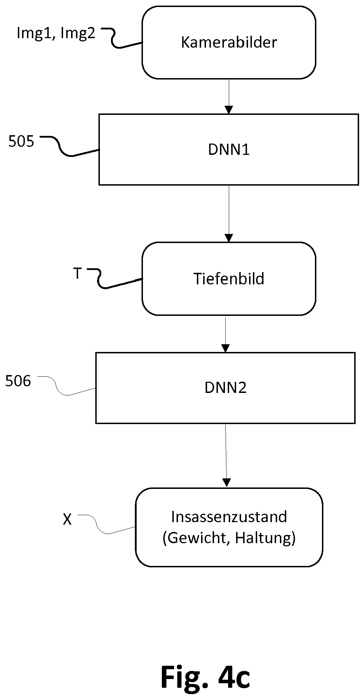

Der Prozessor 40 der Steuereinheit 3 ist dazu ausgelegt, von den Fahrzeuginnenraumkameras Cam1-Cam8 kontinuierlich Kamerabilder zu empfangen und einer Bildanalyse zu unterziehen. Der Prozessor 40 der Steuereinheit 3 ist zusätzlich oder alternativ dazu ausgelegt, durch Korrelation von Kamerabildern ein 3D-Modell eines oder mehrerer Fahrzeuginsassen zu erzeugen, wie in Fig. 4c gezeigt und unten ausführlicher beschrieben ist. Die Kamerabilder bzw. das erzeugte 3D-Modell des Fahrzeuginsassen werden dann in ein neuronales Netzwerkmodul 8 eingespeist, das eine Klassifikation des Zustandes (beispielsweise Gewicht und Haltung) eines Fahrzeuginsassen in bestimmte Gruppen erlaubt. Der Prozessor 40 ist ferner dazu ausgelegt, abhängig von dem Ergebnis dieser Zustandsklassifikation passive Sicherheitssysteme, wie beispielsweise ein Sicherheitsgurtsystem (4 in Fig. 2) anzusteuern. Der Prozessor 3 implementiert ferner eine Kollisionserkennung, wie sie unten in Bezug auf Fig. 11 beschrieben ist.

Die Steuereinheit 3 umfasst ferner einen Speicher und eine Eingabe/ Ausgabe-Schnittstelle. Der Speicher kann aus einem oder mehreren nichtflüchtigen computerlesbaren Medien bestehen und umfasst mindestens einen Programmspeicherbereich und einen Datenspeicherbereich. Der Programmspeicherbereich und der Datenspeicherbereich können Kombinationen von verschiedenen Arten von Speicher umfassen, beispielsweise von einem Nur-Lese-Speicher 43 (ROM = Read-only memory) und einem Direktzugriffsspeicher 42 (RAM = Random Access Memory) (z. B. dynamischer RAM ("DRAM"), synchron DRAM ("SDRAM") usw.). Ferner kann die Steuereinheit für autonomes Fahren 18 ein externes Speicherlaufwerk 44, wie beispielsweise ein externes Festplattenlaufwerk (hard disk drive: HDD), ein Flashspeicher-Laufwerk oder ein nicht flüchtiges Festkörperlaufwerk (solid state drive: SSD) umfassen.

Die Steuereinheit 3 umfasst ferner eine Kommunikationsschnittstelle 45, über welche die Steuereinheit mit dem Fahrzeugkommunikationsnetzwerk (5 in Fig. 2) kommunizieren kann.

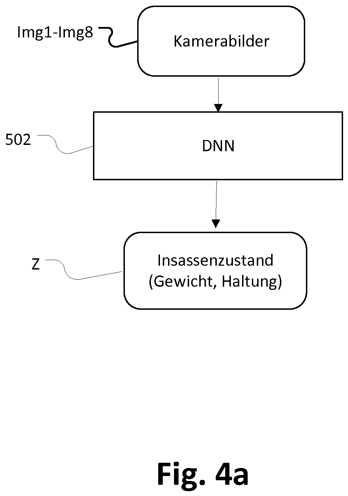

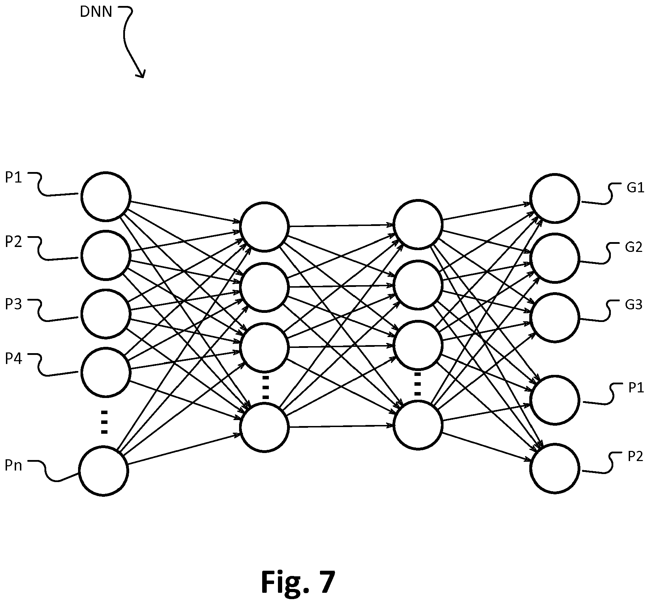

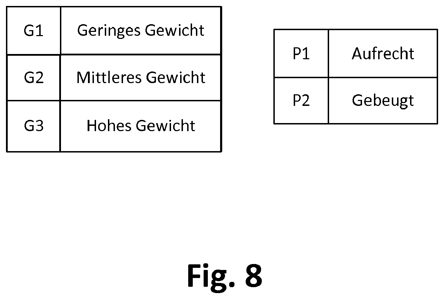

Fig. 4a zeigt ein Flussdiagramm eines Prozesses zur Bestimmung des Zustands eines Fahrzeuginsassen durch Analyse von ein oder mehreren Kamerabildern Img1-Img8 gemäß einem Ausführungsbeispiel. In einem Schritt 502 werden Kamerabilder Img1-Img8, die der Steuereinheit von einer oder mehreren der Innenraumkameras Cam1-Cam8 zugeführt wurden, in ein tiefes neuronales Netzwerk (Deep Neuronal Network = DNN) eingespeist, das darauf trainiert wurde, einen Insassenzustand Z aus den Kamerabildern Img1-Img8 zu erkennen. Das neuronale Netzwerk (siehe Fig. 7 und die zugehörige Beschreibung) gibt dann den erkannten Insassenzustand Z aus. Der Insassenzustand Z kann gemäß einem heuristischen Modell definiert sein. Beispielsweise kann der Insassenzustand Z durch Gewicht und Haltung (Pose) des Fahrzeuginsassen definiert sein, wie dies in Fig. 8 unten näher beschrieben ist.

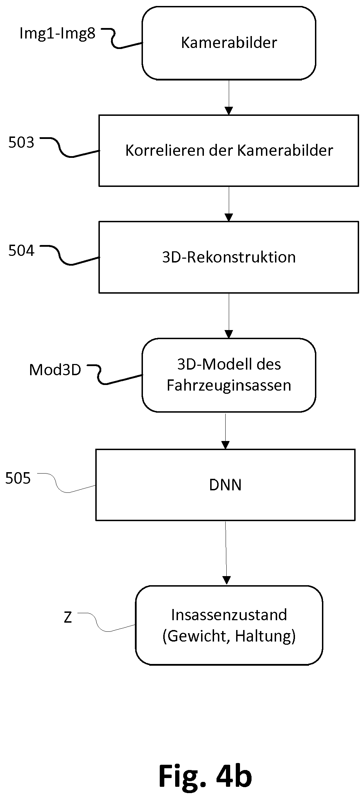

Fig. 4b zeigt ein Flussdiagramm eines Prozesses zur Bestimmung des Zustands eines Fahrzeuginsassen gemäß einem alternativen Ausführungsbeispiel, bei dem ein weiteres neuronales Netz vorgesehen ist, um Tiefeninformationen aus Kamerabildern zu gewinnen. In einem Schritt 505 werden zwei oder mehrere Kamerabilder Img1-Img8, die der Steuereinheit von zwei oder mehreren der Innenraumkameras Cam1-Cam8 zugeführt wurden, in ein tiefes neuronales Netzwerk DNN1 eingespeist, das darauf trainiert wurde, ein Tiefenbild T aus den Kamerabildern zu gewinnen (505). In einem Schritt 506 wird das Tiefenbild T wird in ein zweites tiefes neuronales Netzwerk DNN2 eingespeist, das darauf trainiert wurde, einen Insassenzustand Z aus dem Tiefenbild T zu erkennen. Das neuronale Netzwerk DNN2 gibt dann den erkannten Insassenzustand Z aus. Der Insassenzustand Z kann gemäß einem heuristischen Modell definiert sein. Beispielsweise kann der Insassenzustand Z durch Gewicht und Haltung (Pose) des Fahrzeuginsassen definiert sein, wie dies in Fig. 8 unten näher beschrieben ist.

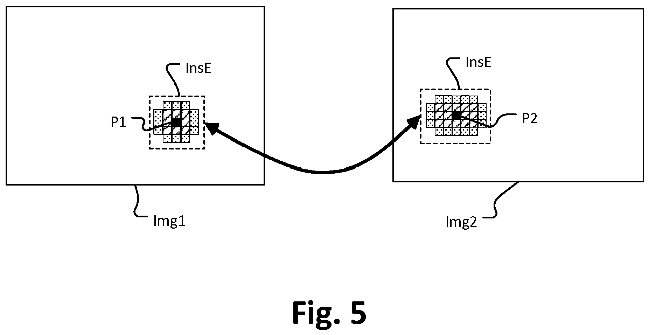

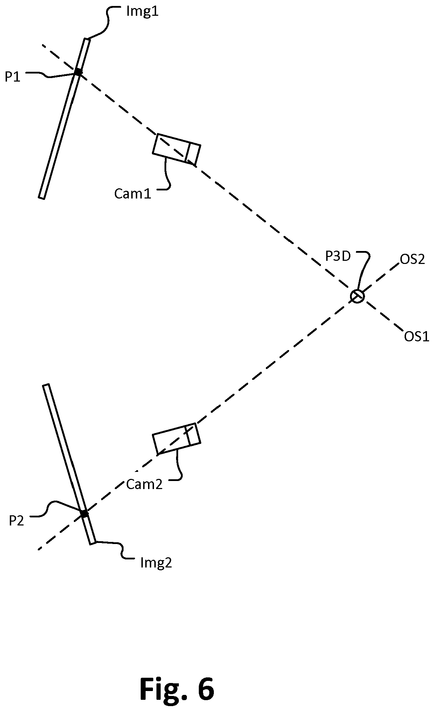

Fig. 4c zeigt ein Flussdiagramm eines Prozesses zur Bestimmung des Zustands eines Fahrzeuginsassen gemäß einem alternativen Ausführungsbeispiel, bei dem durch Korrelation von Kamerabildern ein 3D-Modell des Fahrzeuginsassen erzeugt wird. Der Prozess kann beispielsweise in der Steuereinheit (3 in Fig. 2) ausgeführt werden. In einem Schritt 503, werden zwei oder mehrere Kamerabilder Img1-Img8, die von zwei oder mehreren Innenraumkameras (Cam1 bis Cam8 in Fig. 1 und Fig. 2) aufgenommen wurden miteinander korreliert, um übereinstimmende Pixel in den Kamerabildern Img1-Img8 zu identifizieren, wie dies in Bezug auf Fig. 5 unten näher beschrieben ist. In einem Schritt 504 wird aus der in Schritt 502 gewonnen Information über übereinstimmende Pixel ein 3D-Modell Mod3D des Fahrzeuginsassen rekonstruiert, wie dies in Bezug auf Fig. 6 unten näher beschrieben ist. Das 3D-Modell Mod3D des Fahrzeuginsassen wird in einem Schritt 505 in ein neuronales Netzwerk eingespeist, das darauf trainiert wurde, den Insassenzustand aus einem 3D-Modell Mod3D des Fahrzeuginsassen zu erkennen. Das neuronale Netzwerk gibt dann den erkannten Insassenzustand Z aus. Der Insassenzustand Z kann gemäß einem heuristischen Modell definiert sein. Beispielsweise kann der Insassenzustand Z durch Gewicht und Haltung (Pose) des Fahrzeuginsassen definiert sein, wie dies in Fig. 8 unten näher beschrieben ist.

Fig. 5 zeigt beispielhaft einen Prozess des Korrelierens zweier Kamerabilder, um übereinstimmende Pixel zu identifizieren. Zwei Innenraumkameras, deren Position und Ausrichtung im Raum bekannt ist, liefern ein erstes Kamerabild Img1 und ein zweites Kamerabild Img2. Es könnte sich beispielsweise um Bilder Img1 und Img2 der beiden Innenraumkameras Cam1 und Cam2 aus Fig. 1 handeln. Position und Ausrichtung der beiden Kameras unterscheiden sich, so dass die beiden Bilder Img1 und Img2 ein beispielhaftes Objekt Obj aus zwei verschiedenen Perspektiven liefern. Jedes der Kamerabilder Img1 und Img2 besteht gemäß Auflösung und Farbtiefe der Kamera aus einzelnen Pixeln. Die beiden Kamerabilder Img1 und Img2 werden miteinander korreliert, um übereinstimmende Pixel zu identifizieren, wobei der Fachmann auf ihm bekannte geeignete Bildkorrelierungsverfahren zurückgreifen kann, wie sie oben bereits genannt wurden. Im Korrelationsprozess wird erkannt, dass ein Element InsE (z.B. ein Pixel oder eine Pixelgruppe) des Fahrzeuginsassen sowohl im Bild Img1 als auch im Bild Img2 abgebildet ist und dass beispielsweise Pixel P1 in Bild Img1 mit Pixel P2 in Bild Img2 übereinstimmt. Die Position des Fahrzeuginsassenelements InsE in Bild Img1 unterscheidet sich aufgrund der unterschiedlichen Kamerapositionen und -ausrichtungen von der Position des Fahrzeuginsassenelements InsE in Bild Img2. Ebenso unterscheidet sich auch die Gestalt des Abbilds des Fahrzeuginsassenelements InsE im zweiten Kamerabild aufgrund der Perspektivenänderung von der Gestalt des Abbilds des Fahrzeuginsassenelements InsE im ersten Kamerabild. Aus den unterschiedlichen Positionen beispielsweise des Fahrzeuginsassenelements in Bild Img1 im Vergleich zu Pixel P2 in Bild Img2 kann mittels stereoskopischer Techniken (vgl. Fig. 7 und die Beschreibung unten) auf die Position des Fahrzeuginsassenelements InsE bzw. Pixels im dreidimensionalen Raum rückgeschlossen werden. Der Korrelationsprozess liefert auf diese Weise die Positionen einer Vielzahl von Pixeln eines Fahrzeuginsassen im Fahrzeuginnenraum, aus denen ein 3D-Modell des Fahrzeuginsassen konstruiert werden kann.

Fig. 6 zeigt einen beispielhaften Prozess des Rekonstruierens der dreidimensionalen Position eines Pixels mittels stereoskopischer Techniken. Aus den bekannten Positionen und Ausrichtungen der beiden Kameras Cam1 und Cam2, sowie der ebenfalls bekannten Position und Lage der Bildebenen der Kamerabilder Img1 und Img2 wird für jedes Pixel P1, P2 ein entsprechender optischer Strahl OS1 bzw. OS2 berechnet. Der Schnittpunkt der beiden optischen Strahlen OS1 und OS2 liefert die dreidimensionale Position P3D des Pixels, das als Pixel P1 und P2 in den beiden Kamerabildern Img1 und Img2 abgebildet ist. Im obigen Beispiel der Fig. 7 werden exemplarisch zwei Kamerabilder ausgewertet, um die dreidimensionale Position zweier korrelierter Pixel zu ermitteln. Auf diese Weise könnten beispielsweise die Bilder von einzelnen Kamerapaaren Cam1/Cam2, Cam3/Cam4, Cam5/Cam6 oder Cam7/Cam8 miteinander korreliert werden, um das 3D-Modell zu erzeugen. Um die Rekonstruktionsgenauigkeit zu erhöhen, können jedoch auch mehrere Kamerabilder miteinander korreliert werden. Wenn beispielsweise drei oder mehr Kamerabilder miteinander korreliert werden sollen, dann kann beispielsweise ein erstes Kamerabild als Referenzbild ausgewählt werden, bezüglich dem für jedes weitere Kamerabild eine Disparitätskarte berechnet wird. Die so erhaltenen Disparitätskarten werden dann vereinigt, indem beispielsweise jeweils die Übereinstimmung mit dem besten Korrelationsergebnis ausgewählt wird. Das auf diese Weise gewonnene Modell des Fahrzeuginsassen kann beispielsweise als Sammlung der dreidimensionalen Koordinaten aller im Korrelationsprozess identifizierten Pixel konstruiert werden. Zusätzlich kann diese Sammlung an dreidimensionalen Punkten auch durch Flächen genähert werden, um ein Modell mit Oberflächen zu erhalten.

Fig. 7 zeigt eine schematische Abbildung eines neuronalen Netzwerks gemäß der vorliegenden Erfindung. In einem bevorzugten Ausführungsbeispiel implementiert die Steuereinheit (vgl. Fig. 3) wenigstens ein neuronales Netzwerk (Deep Neuronal Network = DNN). Das Neuronale Netz kann beispielsweise als ein Hardwaremodul realisiert werden (vgl. 8 in Fig. 3). Alternative kann das neuronales Netzwerk auch mittels Software in einem Prozessor realisiert (40 in Fig. 3) werden.

Neuronale Netze, insbesondere Convolutional Neural Networks (CNNs) erlauben eine Modellierung von komplexen räumlichen Zusammenhängen in zum Beispiel Bilddaten und damit einhergehend, eine datengetriebene Zustandsklassifikation (Gewicht und Haltung eines Fahrzeuginsassen). Durch leistungsfähige Rechner lassen sich sowohl das Fahrzeugverhalten, sowie das Insassenverhalten und der Insassenzustand modellieren um daraus Prädiktionen für Aktionen von passiven Sicherheitssystemen, beispielsweise Gurtstraffern und Gurtsperre, abzuleiten.

Die Eigenschaften und die Implementierung von neuronalen Netzen sind den entsprechenden Fachkreisen bekannt. Insbesondere wird hier auf die umfangreiche Fachliteratur zu dem Aufbau, den Netztypen, Lernregeln und bekannten Anwendungen von neuronalen Netzen verwiesen.

Im vorliegenden Fall werden Bilddaten von den Kameras Cam1-Cam8 an das neuronales Netzwerk gesendet werden. Das neuronale Netzwerk kann gefilterte Bilddaten bzw. deren Pixel P1, ..., Pn als Eingabe empfangen und verarbeiten, um einen Fahrerzustand als Ausgabe zu bestimmen, beispielsweise ob sich der Fahrzeuginsasse in einer aufrechten Haltung, Ausgabeneuron P1, oder in einer gebeugten Haltung, Ausgabeneuron P2, befindet und ob der Fahrzeuginsasse ein geringes Gewicht, Ausgabeneuron G1, ein mittleres Gewicht, Ausgabeneuron G2, oder hohes Gewicht, Ausgabeneuron G3, aufweist. Das neuronale Netzwerk kann einen erfassten Fahrzeuginsassen beispielsweise als "Insasse in aufrechter Haltung" oder "Insasse in gebeugter Haltung" bzw. als "Insasse mit geringem Gewicht", "Insasse mit mittlerem Gewicht" oder "Insasse mit hohem Gewicht" klassifizieren.

Das neuronale Netzwerkmodul kann ein neuronales Netzwerk beinhalten, das gemäß einem Mehrebenen- (oder "tiefen") Modell konstruiert wurde. Ein neuronales Mehrebenen-Netzwerkmodell kann eine Eingabeebene, eine Vielzahl von verborgenen Ebenen und eine Ausgabeebene beinhalten. Ein neuronales Mehrebenen-Netzwerkmodell kann auch eine Verlustebene beinhalten. Für die Klassifizierung von Sensordaten (z. B. ein Kamerabild) werden Werte in den Sensordaten (z. B. Pixelwerte) Eingangsknoten zugewiesen und dann durch die Vielzahl von verborgenen Ebenen des neuronalen Netzwerks eingespeist. Die Vielzahl von verborgenen Ebenen kann eine Reihe von nichtlinearen Transformationen durchführen. Am Ende der Transformationen ergibt ein Ausgangsknoten einen Wert, der der Klasse (z. B. "aufrecht" oder "gebeugt") entspricht, die von dem neuronalen Netzwerk gefolgert wird.

Das neuronale Netz wird eingerichtet ("trainiert"), so dass es für bestimmte bekannte Eingangswerte erwartete Antworten erzeugt. Ist ein derartiges neuronales Netz einmal eingerichtet und sind seine Parameter eingestellt, so wird das Netz regelmäßig im Anwendungsfall als eine Art Black-Box verwendet, welche auch für unbekannte Eingangswerte zugehörige und passende Ausgangswerte erzeugt.

Auf diese Weise kann das neuronale Netzwerk trainiert werden, um auf Grundlage von Kamerabildern zwischen gewünschten Klassifizierungen, wie z. B. "Insasse in aufrechter Haltung" oder "Insasse in gebeugter Haltung", "Insasse mit geringem Gewicht", "Insasse mit mittlerem Gewicht" und "Insasse mit hohem Gewicht" zu unterscheiden.

Fig. 8 zeigt eine beispielhafte Ausgabe des neuronalen Netzwerkmoduls 8. Das neuronale Netzwerk ermöglicht es, einem Kamerabild der Innenraumkameras Cam1-Cam8 (Fig. 4a) oder einem 3D-Modell des Fahrzeuginsassen (Fig. 4b) eine bestimmte Klassifizierung zuzuordnen. Die Klassifizierung folgt einem vordefinierten heuristischen Modell. In Beispiel der Fig. 6 wird zwischen den Gewichtsklassifizierungen G1 "Insasse mit geringem Gewicht" (z.B. < 65 kg), G2 "Insasse mit mittlerem Gewicht" (z.B. 65 - 80 kg) und G3 "Insasse mit hohem Gewicht" (> 80 kg) unterschieden, sowie zwischen den Haltungsklassifizierungen P1 "Insasse in aufrechter Haltung" und P2 "Insasse in gebeugter Haltung".

Die hier gegebenen Zustandsklassen sind schematisch und beispielhaft. Zusätzlich oder alternativ können andere Zustände definiert werden und es wäre auch denkbar, von einem Kamerabild der Innenraumkameras Cam1-Cam8 oder einem 3D-Modell des Fahrzeuginsassen Rückschlüsse auf das Verhalten des Fahrzeuginsassen zu ziehen. Beispielsweise könnte aus den Bilddaten eine Blickrichtung, eine Handgelenkpose oder dergleichen abgeleitet und mittels eins neuronalen Netzwerks klassifiziert werden.

Fig. 9 zeigt ein Sicherheitsgurtsystem gemäß der vorliegenden Erfindung. Das Sicherheitsgurtsystem ist dem Dreipunkt-Gurt nachempfunden und sichert einen Fahrzeuginsassen Ins. Dieses System wird erweitert um zwei Gurtstraffer auf der einen Seite des Fahrzeuginsassen, einen oberen Gurtstraffer GSPO und einen unteren Gurtstraffer GSPU, sowie eine Gurtsperre GSP oberhalb der Schlosszunge des Gurts. Die drei Einheiten können unabhängig voneinander angesteuert und betätigt werden. Die Gurtstraffer GSPO, GSPU sind in der Lage, den Gurt mit einer definierten Zugkraft einzuziehen, wobei die Gurtsperre GSP lediglich in der Lage ist den Gurt an der entsprechenden Stelle in Position zu halten.

Erfindungsgemäß werden die Gurtstraffer GSPO und GSPU in Abhängigkeit von der Fahrsituation und von dem Ergebnisses der Zustandsklassifikation des Fahrzeuginsassen von der Steuereinheit (3 in Fig. 2) so angesteuert, dass der Sicherheitsgurt mit einer erhöhten Gurtspannkraft gestrafft wird. Der Oberkörper des Fahrzeuginsassen Ins wird durch die Gurtspannkraft entgegengesetzt der Fahrtrichtung in Richtung der Sitzlehne des Fahrzeugsitzes bewegt.

Ziel ist es, den Insassen mit entsprechender Zugrichtung und Zugkraft der Gurtstraffer GST und unter Einsatz der Gurtsperre GSP vor dem Aufprall in eine optimale Position zu bringen. Die optimale Position ist hierbei definiert als die Position, in der das passive Sicherheitssystem (Airbag, etc.) den optimalen Wirkungsgrad einnimmt. Es wird davon ausgegangen, dass dies der aufrichten Lage des Insassen entspricht, wobei der Gurt optimal gestrafft ist. Nimmt beispielsweise ein Beifahrer eine gebeugte Haltung ein, so begibt er sich außerhalb der Position, in der ein optimaler Schutz durch den Airbag gewährleistet ist und seine Position kann durch Straffung des Sicherheitsgurtes korrigiert werden.

Das Erreichen der optimalen Position wird durch die Gurtsperre GSP beschleunigt, da so die einzuziehende Gurtlänge zwischen oberem Gurtstraffer GSTO und der Gurtsperre GSP ausschlaggebend ist und nicht mehr die gesamte Gurtlänge von Gurtstraffer zu Gurtstraffer eingezogen werden muss.

Ein Gurtstraffer kann beispielsweise als Elektromotor ausgeführt sein. In diesem Fall kann, um die erhöhte Gurtspannkraft zu erzeugen, dem Elektromotor als Gurtstraffer eine Spannung, die oberhalb der Nennspannung des Elektromotors liegt, zugeführt werden. Alternativ dazu kann eine Getriebeübersetzung des Elektromotors verändert werden. In einer weiteren alternativen Ausführungsform kann die erhöhte Gurtspannkraft mittels eines mechanischen oder elektrischen Energiespeichers erzeugt werden.

Erfindungsgemäß ist die Steuereinheit dazu ausgelegt, bei Erkennen einer kritischen Fahrsituation, beispielsweise bei einem prädizierten Aufprall oder einer prädizierten Notbremsung, die durch einen Aufprall bzw. eine Betätigung des Bremspedals und Detektion eines Objektes mit vorausschauender Sensorik oder auch durch den Bremsassistenten ausgelöst werden kann, die Gurtstraffer im Sicherheitsgurtsystem 4 zu aktivieren und gegebene Kräfte anzusteuern.

Die Steuereinheit 3 ist ferner so ausgelegt, dass der durch die Bildverarbeitung ermittelte Zustand eines Fahrzeuginsassen in die Steuerung der Gurtstraffer mit einfließt. So kann beispielsweise das Kraftniveau bei schwereren Insassen auf ein höheres Niveau angehoben werden und bei leichteren Insassen entsprechend abgesenkt werden, um so neben einer optimalen Sicherung einen maximalen Komfort des Insassen zu gewährleisten.

Für den angepassten Einsatz der Gurtstraffer wird beispielsweise eine Heuristik vorgesehen, die ausgehend von Haltung und Gewicht des Insassen sowie von einem Fahrzeugzustand/einer Fahrsituation eine entsprechende Gurtstraffroutine definiert. Zusätzlich oder alternativ kann diese datengetrieben gelernt und so optimiert werden.

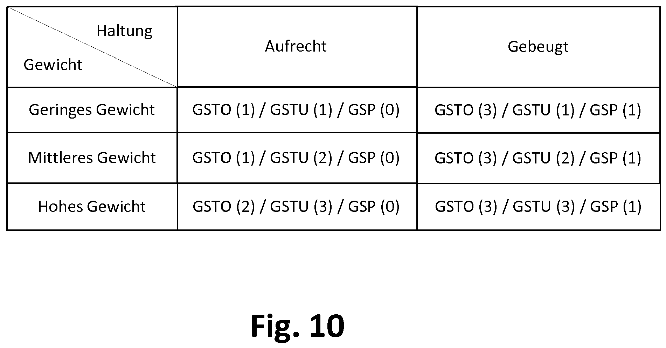

Fig. 10 zeigt eine beispielhafte qualitative Heuristik für eine Sicherheitsgurtsteuerung mit der Intensität des oberen (GSTO) und unteren Gurtstraffers (GSTU), sowie der Gurtsperre (GSP). Die Gurtstraffer werden auf Intensitäten 0, 1, 2 beziehungsweise 3 eingestellt, die steigenden Kraftniveaus entsprechen, während die Gurtsperre auf Intensitäten von 0 (keine Gurtsperre) beziehungsweise 1 (aktivierte Gurtsperre) eingestellt wird.

Wie aus der Tabelle in Fig. 10 ersichtlich ist, wird bei einem Insassen mit geringem Gewicht und aufrechter Haltung das Sicherheitsgurtsystem so angesteuert, dass die Intensitäten für GSTO gleich 1, für GSTU gleich 1 und für GSP gleich 0 betragen. Bei einem Insassen mit geringem Gewicht und gebeugter Haltung wird das Sicherheitsgurtsystem so angesteuert, dass die Intensitäten für GSTO gleich 3, für GSTU gleich 1 und für GSP gleich 1 betragen. Bei einem Insassen mit mittlerem Gewicht und aufrechter Haltung wird das Sicherheitsgurtsystem so angesteuert, dass die Intensitäten für GSTO gleich 1, für GSTU gleich 2 und für GSP gleich 0 betragen. Bei einem Insassen mit mittlerem Gewicht und gebeugter Haltung wird das Sicherheitsgurtsystem so angesteuert, dass die Intensitäten für GSTO gleich 3, für GSTU gleich 2 und für GSP gleich 1 betragen. Bei einem Insassen mit hohem Gewicht und aufrechter Haltung wird das Sicherheitsgurtsystem so angesteuert, dass die Intensitäten für GSTO gleich 2, für GSTU gleich 3 und für GSP gleich 0 betragen. Bei einem Insassen mit hohem Gewicht und gebeugter Haltung wird das Sicherheitsgurtsystem so angesteuert, dass die Intensitäten für GSTO gleich 3, für GSTU gleich 3 und für GSP gleich 1 betragen.

In einer bevorzugten Ausführungsform der vorliegenden Erfindung werden die Gurtparameter ferner unter Berücksichtigung einer prädizierten Verzögerung, die der Fahrer bei einem Aufprall oder Bremsvorgang erfahren wird, angepasst. Um die Verzögerung vorherzusagen wird zunächst eine Kollisionsprädiktion durchgeführt. Ziel ist beispielsweise die Schätzung des "point of no return", ab dem eine Kollision unvermeidbar geworden ist und ein Aufprall ansteht. Anhand dieses "point of no return" und der sich ergebenden Aufprallgeschwindigkeit werden dann die Verzögerungsstrategie und die sich ergebenden Verzögerungen abgeleitet.

Fig. 11 zeigt schematisch eine Kollisionserkennung gemäß der vorliegenden Erfindung. Die Kollisionserkennung, die beispielsweise in der Steuereinheit (3 in Fig. 2) implementiert ist, empfängt Daten von Umfeldsensoren 6 und Fahrzeugsensoren 7 (siehe auch Fig. 2). In einem Schritt 510 ermittelt die Steuereinheit auf Grundlage der Sensordaten, ob eine Kollision bzw. ein abrupter Bremsvorgang bevorsteht oder nicht. Im Fall einer bevorstehenden Kollision werden Parameter der vorhergesagten Kollision, beispielsweise eine prädizierte Verzögerung VZ vorhergesagt. Mittels der Kollisionserkennung wird durch das erfindungsgemäße Verfahren ein kritischer Fahrzeugzustand durch Überwachung von Fahrzeugverzögerung, Eigengeschwindigkeit, Relativgeschwindigkeit und Abstand zu einem vorausfahrenden oder stehenden Fahrzeug oder Objekt, Gierwinkel, Giergeschwindigkeit, Lenkwinkel und/oder Querbeschleunigung oder einer beliebigen Kombination dieser Parameter erkannt.

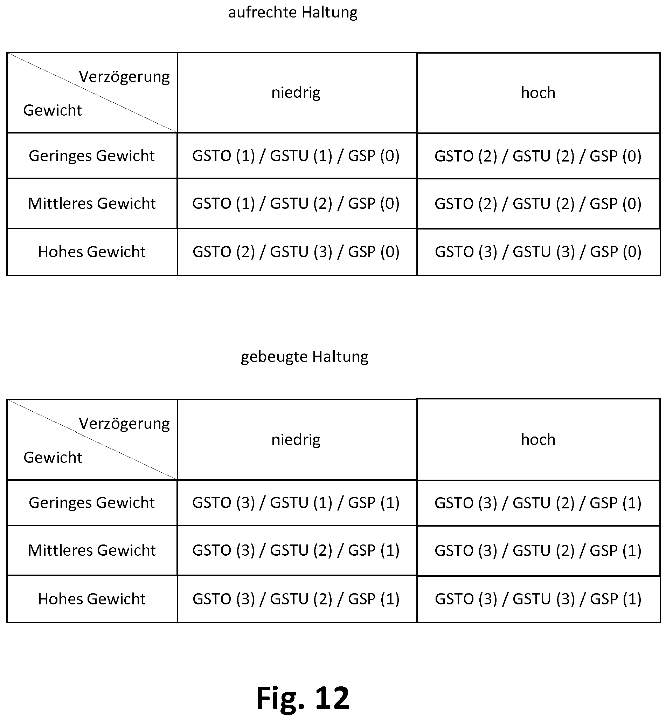

Fig. 12 zeigt eine beispielhafte qualitative Heuristik für eine Sicherheitsgurtroutine bei der die Gurtparameter unter Berücksichtigung einer prädizierten Verzögerung, die der Fahrer beim Aufprall erfahren wird, angepasst werden.

Die obere Tabelle in Fig. 12 zeigt eine Heuristik im Fall einer aufrechten Haltung des Fahrzeuginsassen. Wie aus der Tabelle ersichtlich ist, wird bei einem Insassen mit geringem Gewicht und geringer Verzögerung das Sicherheitsgurtsystem so angesteuert, dass die Intensitäten für GSTO gleich 1, für GSTU gleich 1 und für GSP gleich 0 betragen. Bei einem Insassen mit geringem Gewicht und hoher Verzögerung wird das Sicherheitsgurtsystem so angesteuert, dass die Intensitäten für GSTO gleich 2, für GSTU gleich 2 und für GSP gleich 0 betragen. Bei einem Insassen mit mittlerem Gewicht und geringer Verzögerung wird das Sicherheitsgurtsystem so angesteuert, dass die Intensitäten für GSTO gleich 1, für GSTU gleich 2 und für GSP gleich 0 betragen. Bei einem Insassen mit mittlerem Gewicht und hoher Verzögerung wird das Sicherheitsgurtsystem so angesteuert, dass die Intensitäten für GSTO gleich 2, für GSTU gleich 2 und für GSP gleich 0 betragen. Bei einem Insassen mit hohem Gewicht und geringer Verzögerung wird das Sicherheitsgurtsystem so angesteuert, dass die Intensitäten für GSTO gleich 2, für GSTU gleich 3 und für GSP gleich 0 betragen. Bei einem Insassen mit hohem Gewicht und hoher Verzögerung wird das Sicherheitsgurtsystem so angesteuert, dass die Intensitäten für GSTO gleich 3, für GSTU gleich 3 und für GSP gleich 0 betragen.

Die untere Tabelle in Fig. 12 zeigt eine Heuristik im Fall einer gebeugten Haltung des Fahrzeuginsassen. Wie aus der Tabelle ersichtlich ist, wird bei einem Insassen mit geringem Gewicht und geringer Verzögerung das Sicherheitsgurtsystem so angesteuert, dass die Intensitäten für GSTO gleich 3, für GSTU gleich 1 und für GSP gleich 1 betragen. Bei einem Insassen mit geringem Gewicht und hoher Verzögerung wird das Sicherheitsgurtsystem so angesteuert, dass die Intensitäten für GSTO gleich 3, für GSTU gleich 2 und für GSP gleich 1 betragen. Bei einem Insassen mit mittlerem Gewicht und geringer Verzögerung wird das Sicherheitsgurtsystem so angesteuert, dass die Intensitäten für GSTO gleich 3, für GSTU gleich 2 und für GSP gleich 1 betragen. Bei einem Insassen mit mittlerem Gewicht und hoher Verzögerung wird das Sicherheitsgurtsystem so angesteuert, dass die Intensitäten für GSTO gleich 3, für GSTU gleich 2 und für GSP gleich 1 betragen. Bei einem Insassen mit hohem Gewicht und geringer Verzögerung wird das Sicherheitsgurtsystem so angesteuert, dass die Intensitäten für GSTO gleich 3, für GSTU gleich 2 und für GSP gleich 1 betragen. Bei einem Insassen mit hohem Gewicht und hoher Verzögerung wird das Sicherheitsgurtsystem so angesteuert, dass die Intensitäten für GSTO gleich 3, für GSTU gleich 3 und für GSP gleich 1 betragen.

Die Verwendung eines neuronalen Netzwerks zur Bestimmung des Fahrerzustands ermöglicht beispielsweise eine Bestimmung einer sog. "Attention map", welche aufzeigt, welche Bereiche eines Fahrzeuginsassen für die Erkennung des Insassenzustands besonders relevant sind.

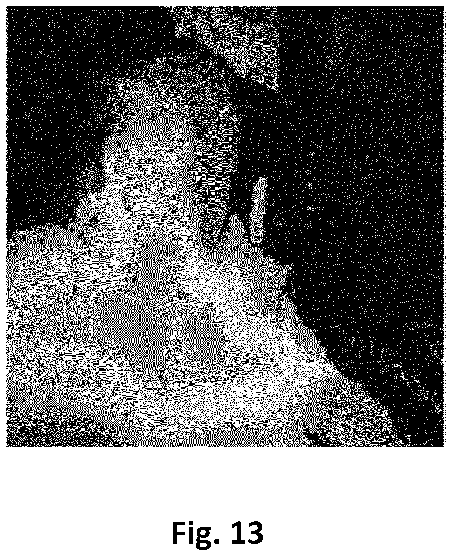

Fig. 13 zeigt eine beispielhafte "Attention map", die wichtige Eigenschaften für die Gewichtsklassifizierung mit CNNs visualisiert. Die "Attention Map" stellt dar, welche Bereiche des Eingangsbildes besonders gewichtig für die Bestimmung des Fahrerzustands sind. Dies dient zur besseren Nachvollziehbarkeit und Interpretierbarkeit des Ergebnisses und der Funktionsweise des Algorithmus und kann auch dazu verwendet werden, Kamera, Kameraposition und Kameraausrichtung zu optimieren.

### Bezugszeichen

- 1: Fahrzeug
- 2: Fahrzeuginnenraum
- 3: Steuereinheit
- 4: Sicherheitsgurtsystem
- 5: Kommunikationssystem
- 6: Umfeldsensoren
- 7: Fahrzeugsensoren
- 8: Neuronales Netzwerkmodul
- Cam1-Cam8: Innenraumkamera
- Img1-Img8: Kamerabilder
- GSPO: oberer Gurtstraffer
- GSPU: unterer Gurtstraffer
- GSP: Gurtsperre
- Pix: Pixel des Fahrzeuginsassen
- Ins: Fahrzeuginsasse im Fahrzeuginnenraum
- InsE: Element des Fahrzeuginsassen im Bild
- Mod3D: 3D-Modell des Fahrzeuginnenraums
- Mod3Da: rekonstruiertes 3D-Modell des Fahrzeuginnenraums
- Mod3Db: vordefiniertes 3D-Modell des Fahrzeuginnenraums
- P1, P2: Pixel im Kamerabild
- P3D: rekonstruierte dreidimensionale Position
- OS1, OS2: Optische Strahlen bezüglich erster und zweiter Kamera
- S1-S4: Sitze
- Z: Insassenzustand
- VZ: prädizierte Verzögerung

## Patentansprüche

1. Fahrerassistenzsystem für ein Fahrzeug (1) umfassend eine Steuereinheit (3) die dazu eingerichtet ist, einen Zustand (Z) eines Fahrzeuginsassen (Ins) mittels eines neuronalen Netzes (DNN) zu bestimmen und ein Sicherheitsgurtsystem (4) zur Positionierung bzw. Fixierung des Fahrzeuginsassen (Ins) in Abhängigkeit von dem erkannten Zustand (Z) des Fahrzeuginsassen (Ins) anzusteuern.

2. Fahrerassistenzsystem nach Anspruch 1, wobei die Steuereinheit (3) ferner dazu eingerichtet ist, eine vordefinierten Fahrsituation zu erkennen und das Sicherheitsgurtsystem (4) zur Positionierung bzw. Fixierung des Fahrzeuginsassen (Ins) bei Erkennen der vordefinierten Fahrsituation anzusteuern.

3. Fahrerassistenzsystem nach Anspruch 1 oder 2, wobei die Steuereinheit (3) ferner dazu eingerichtet ist, Parameter (VZ) einer vordefinierten Fahrsituation zu erkennen und das Sicherheitsgurtsystem (4) zur Positionierung bzw. Fixierung des Fahrzeuginsassen (Ins) in Abhängigkeit dieser Parameter (VZ) anzusteuern.

4. Fahrerassistenzsystem nach einem der vorstehenden Ansprüche, wobei die Steuereinheit (3) dazu eingerichtet ist, den Zustand (Z) des Fahrzeuginsassen (Ins) durch die Analyse eines oder mehrerer Kamerabilder (Img1-Img8) einer oder mehrerer Fahrzeuginnenraumkameras (Cam1-Cam8) durch das neuronale Netzwerk (DNN) ermittelt wird.

5. Fahrerassistenzsystem nach einem der vorstehenden Ansprüche, wobei der Zustand (Z) des Fahrzeuginsassen (Ins) durch Haltung (P1, P2) des Fahrzeuginsassen (Ins) und Gewicht (G1, G2, G3) des Fahrzeuginsassen (Ins) definiert ist.

6. Fahrerassistenzsystem nach einem der vorstehenden Ansprüche, wobei die Steuereinheit dazu ausgelegt ist, auf Grundlage von Kamerabildern (Img1-Img8) einer oder mehrerer Fahrzeuginnenraumkameras (Cam1-Cam8) ein 3D-Modell (Mod3D) des Fahrzeuginsassen (Ins) zu erzeugen und den Zustand (Z) des Fahrzeuginsassen (Ins) durch die Analyse des 3D-Modells (Mod3D) durch das neuronale Netzwerk (DNN) zu ermitteln.

7. Fahrerassistenzsystem nach einem der vorstehenden Ansprüche, wobei das Sicherheitsgurtsystem (4) aus mehreren Einheiten (GSP, GSTO, GSTU) aufgebaut ist, die unabhängig voneinander angesteuert werden.

8. Fahrerassistenzsystem nach einem der vorstehenden Ansprüche, wobei das Sicherheitsgurtsystem (4) einen oder mehrere steuerbare Gurtstraffer (GSTU, GSTO) umfasst.

9. Fahrerassistenzsystem nach einem der vorstehenden Ansprüche, wobei das Sicherheitsgurtsystem (4) eine steuerbare Gurtsperre (GSP) umfasst.

10. Verfahren für ein Fahrerassistenzsystem, bei dem ein Zustand (Z) eines Fahrzeuginsassen (Ins) mittels eines neuronalen Netzes (DNN) bestimmt wird und ein Sicherheitsgurtsystem (4) zur Positionierung bzw. Fixierung eines Fahrzeuginsassen (Ins) in Abhängigkeit von dem erkannten Zustand (Z) des Fahrzeuginsassen angesteuert wird.
